# EUROPÄISCHE PATENTSCHRIFT

(11) **EP 1 477 638 B1**
(45) Veröffentlichungstag und Bekanntmachung des Hinweises auf die Patenterteilung: **24.12.2008**
(21) Anmeldenummer: 04007891.7
(22) Anmeldetag: 01.04.2004
(51) Int. Cl.: F01L 13/00, F02D 13/02, F01L 1/14

(54) **Variable Ventilsteuerungseinrichtung**
Variable valve drive
Commande de soupape variable

(30) Priorität: 08.05.2003 DE 10320468
(43) Veröffentlichungstag der Anmeldung: 17.11.2004
(73) Patentinhaber: Caterpillar Motoren GmbH & Co. KG, 24159 Kiel (DE)
(72) Erfinder: Nagel, Jürgen, Dipl.-Ing., 24214 Gettorf (DE); Schlemmer-Kelling, Udo, 24113 Schulensee (DE)
(74) Vertreter: Klang, Alexander H.

(56) Entgegenhaltungen:
- DE-A- 2 055 665
- DE-U- 1 983 334
- US-A- 3 520 287
- US-A- 6 095 115
- US-A1- 2002 121 255

## Beschreibung

Die Erfindung bezieht sich auf eine variable Ventilsteuerungseinrichtung zum verzögerten Schließen von Ventilen einer Brennkraftmaschine, insbesondere für Diesel- und Gasmotoren, welche eine über einen Ventilnocken und einen Rollenantrieb betätigte Stoßstange aufweisen, die mit einem Kipphebel verbunden und um eine Drehachse verschwenkbar ist sowie mit einem Ende eine Ventilbetätigungsbrücke beaufschlagt, die mit ihren beiden freien Enden jeweils mit einem Ventilschaft eines Ventils verbunden ist und der Kipphebel über die Ventilbetätigungsbrücke mit einer Verzögerungseinrichtung verbunden ist, die eine Buchse an der Ventilbetätigungsbrücke sowie einen darin verschiebbar gehaltenen Stellkolben an einer ortsfesten Führungsstange umfaßt

Es ist bekannt, bei der NOx Minderung für Diesel- und Gasmotoren das bekannte Verfahren nach Miller zur Abkühlung der Verbrennungstemperatur einzusetzen. Hierbei wird ein Kühleffekt durch ein sehr frühes Schließen der Einlaßventile erreicht. Eine anschließende Expansion der Gasmenge im Brennraum senkt die Frischgastemperatur und der Füllungsverlust des aufgeladenen Motors wird durch einen Turbolader mit einem erhöhten Ladedruck ausgeglichen.

Aus der US-A 3,520,287 ist eine variable Ventilsteuerungseinrichtung für eine Ausbildung einer Motorbremse über Auslaßventile einer Brennkraftmaschine bekannt, die über eine Ventilbrücke beaufschlagte Ventile aufweist, wobei die Ventilbrücke über einen Kipphebel beaufschlagt wird. Mit der Ventilbrücke ist eine Verzögerungseinrichtung verbunden, welche ansteuerbar ist und welche in einer Buchse der Ventilbrücke einen verschiebbar gehaltenen Kolben aufweist.

Für transiente Motorzustände, bei denen der aufgeladene Motor in kurzer Zeit eine höhere Leistung/Drehmoment abgeben muß, ist das Ausschalten des Miller Effekts sehr hilfreich. Dies kann auf der einen Seite durch ein Verschieben des Einlaßnockenprofils durch Verdrehung der Nockenwelle gegenüber der Kurbelwelle oder durch eine Verschiebung des Nockens auf der Nockenwelle oder durch eine Veränderung der Anlenkung Nocken/Ventil erreicht werden. In allen Fällen wird durch die Verschiebung des Nockenprofils eine Ventilüberschneidung und damit einen Spülung der Zylinder verringert.

Aufgabe der Erfindung ist es, eine variable Ventilsteuerungseinrichtung zu schaffen, die insbesondere zum verzögerten Schließen von Einlaßventilen einer Brennkraftmaschine einsetzbar ist, um eine Verringerung von Rußemissionen und eine Verbesserung einer Lastaufnahme eines Gas- oder Dieselmotors zu gewährleisten.

Diese Aufgabe wird erfindungsgemäß durch die Merkmale des Patentanspruchs 1 gelöst.

Hierdurch wird vermieden, daß ein frühes Schließen des Auslaßventils zu einem schlechten Spülen des Brennraumes führt und die Brenngase nach Abschluß der Verbrennung nicht vollständig ausgeschoben werden. Es hat sich gezeigt, daß ein verzögertes Schließen eine bessere Abgasrückführung mit einem höheren Anteil von Restgasen ermöglicht und damit die NOx-Emmission senkbar ist.

Weitere vorteilhafte Ausbildungen sind durch die Merkmale der Unteransprüche gekennzeichnet.

Die mit der Erfindung hauptsächlich erzielten Vorteile bestehen darin, daß durch eine Einrichtung der Schließvorgang der Gaswechselventile entsprechend der Steuerung einer zuschaltbaren Ventileineinheit, wie beispielsweise durch eine Drossel, verzögerbar ist. Die Verzögerung des Schließvorgangs wird dadurch erreicht, daß ein Kipphebel der Ventile einerseits über eine Ventilbetätigungsbrücke mit einer Verzögerungseinrichtung und andererseits unmittelbar mit einer spielausgleichenden Teleskopeinrichtung an der Stoßstange verbunden ist und die Verzögerungseinrichtung eine Zylinderbuchse an der Ventilbetätigungsbrücke sowie einen darin verschiebbar gehaltenen Stellkolben an einer ortsfesten Führungsstange umfaßt und eine Schmieröl aufnehmende Ringkammer in der Einrichtung über ölführende Verbindungsleitungen mit Ventileinheiten beim Öffnungs- und Schließvorgang der Gaswechselventile verbunden sind.

Zur Erzielung des verzögerten Schließvorgangs der Gaswechselventile ist zwischen der Führungstange des Stellkolbens der Einrichtung und der Zylinderbuchse an der Ventilbetätigungsbrücke die Ringkammer angeordnet, welche über eine Querbohrung mit einer axialen Bohrung in der Führungsstange verbunden ist, in welcher endseitig eine Anstichbohrung einmündet, die über Leitungen mit den Ventileinheiten verbindbar sind. Insbesondere ist vorgesehen, daß die Anstichbohrung in Abhängigkeit von der Ventilstellung der Gaswechselventile über eine Leitung entweder mit der einen Ventileinheit, bestehend aus einem Durchgangs- und Absperrventil oder über eine weitere Leitung mit der weiteren Ventileinheit, bestehend aus einem Rückschlagventil und einer Drossel zu einem Schmierölanschluß verbindbar ist. Somit kann über die Ventileinheiten mit den entsprechend ausgestalteten Ventilen eine Steuerung der Gaswechselventile in Abhängigkeit von der Schließstellung und/oder der Öffnungsstellung erzielt werden.
So ist bei einem Schließvorgang der Gaswechselventile, das in der Ringkammer eingeschlossene Schmieröl über die axiale Bohrung und die Anstichbohrung sowie über eine Leitung bei geschlossenem Ventil in der Ventileinheit der Drossel in der weiteren Ventileinheit zuführbar und die Einlaßventile eine Verzögerungsstellung einnehmen. Dagegen wird bei einer Verzögerungsstellung der Gaswechselventile der Kipphebel an seinem der Ventilbrücke abgekehrten freien Ende von der Teleskopeinrichtung um die Drehachse mittels eines in der Stoßstange geführten und federbelasteten Teleskopgliedes in Richtung Kipphebel spielfrei verschwenkt.

Damit die Teleskopeinrichtung ständig gegen das eine freie Ende des Kipphebels drücken kann, ist das Teleskopglied im hohlen Zylinderschaft der Stoßstange geführt und zwischen einem herausstehenden Kopf des Teleskopgliedes und einem äußeren Abstützring des Zylinderschaftes ist eine Druckfeder angeordnet. In einer Schließphase der Gaswechselventile bzw. in einer Nockenschließphase wird mit einer zeitlichen Verzögerung Schmieröl der Ringkammer zugeführt, derart, daß die Federkräfte der Ventilfedern die Druckfeder der Teleskopeinrichtung überdrückend ausgebildet sind und die Auslaßventile einer Schließstellung zuführbar sind.

In einer nach der Schließphase der Gaswechselventile anschließenden Öffnungsphase der Gaswechselventile wird das Schmieröl über das Rückschlagventil, eine Leitung sowie über die Anstichbohrung und die axiale Bohrung der Ringkammer zugeleitet.

Ein Ausführungsbeispiel der Erfindung ist in der Zeichnung schematisch dargestellt. Es zeigen:

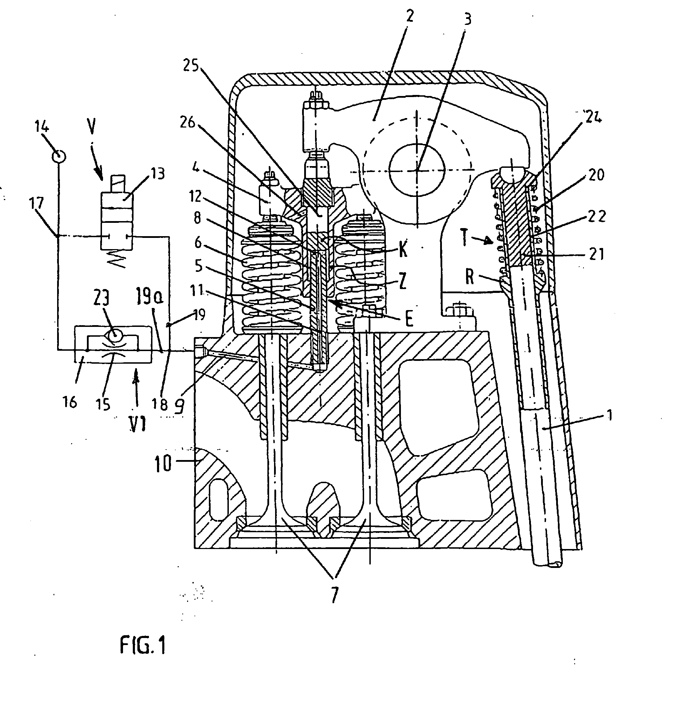

- Fig. 1: eine Schnittdarstellung der Gaswechselventile mit einer Ventilbetätigungsbrücke,

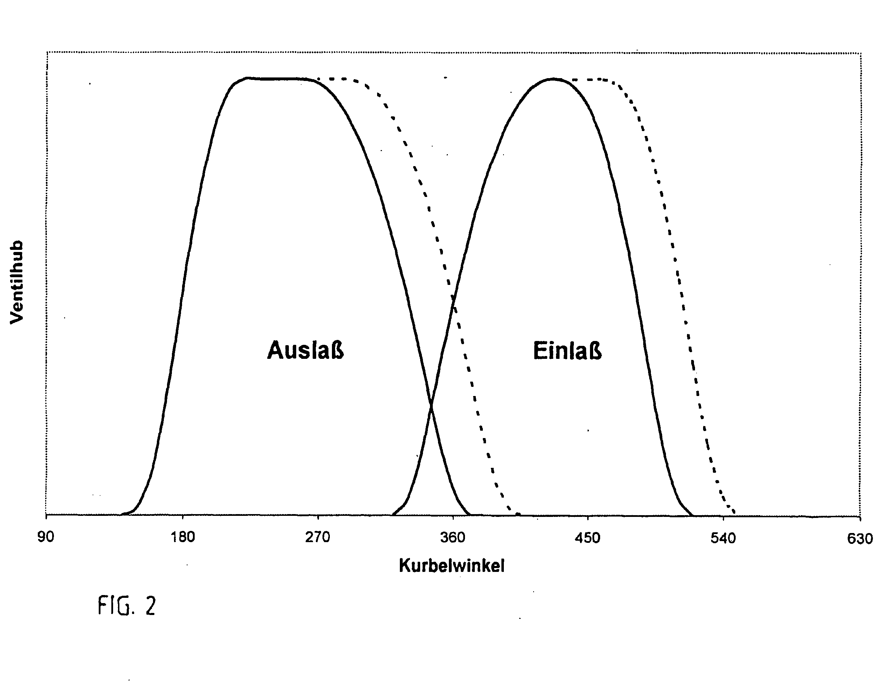

- Fig. 2: ein Diagramm des Ventilhubs über den Kurbelwinkel.

Hierbei sind Einlaßventile 7 für eine Brennkraftmaschine im Zylinderkopf 10 geführt und mit ihrem Schaftende jeweils mit einer Ventilbetätigungsbrücke 4 verbunden, der zentrisch von einem Ende eines Kipphebels 2 beaufschlagbar ist. Ein weiteres Ende dieses Kipphebels 2 ist mit einer Stoßstange 1 unter Zwischenschaltung einer sogenannten Teleskopeinrichtung T verbunden. In der Ventilbetätigungsbrücke 4 sowie im Zylinderkopf 10 ist gemeinsam eine Verzögerungseinrichtung E mit einer Schmieröl aufnehmenden Ringkammer 8 integriert, welche über ölführende Leitungen 11, 9, 19, 19a mit Ventileinheiten V und V1 in Verbindung steht.

Die Verzögerungseinrichtung E umfaßt eine in der Ventilbetätigungsbrücke 4 integrierte Zylinderbuchse Z, die vorzugsweise zwischen den Einlaßventilen 7 angeordnet ist. In dieser Zylinderbuchse Z ist eine Führungsstange 5 mit einem endseitigen Stellkolben K angeordnet, die zwischen sich und dem endseitigen Abschluß der Zylinderbuchse Z die Ringkammer 8 einschließt, die mit einer axialen Bohrung 11 in der Führungsstange 5 verbunden ist und in die eine Anstichbohrung 9 einmündet, die über ölführende Leitungen 19, 19a mit dem Ventilblock V und/oder V1 verbindbar sind. Das Absperrventil 13 ermöglicht ein Absperr- und Durchgangsventil 13 und verbindet somit wahlweise einen T -Anschluß 17 mit einem Schmierölanschluß 14. Die weitere Ventileinheit VI weist die Drossel 15 sowie ein Rückschlagventil 23 auf, die über einen T-Anschluß 18 an die Leitung 19 bzw. 19a und an die Anstichbohrung 9 angeschlossen sind.

Die Teleskopeinrichtung T besteht im Wesentlichen aus einem in der hohlen. Stoßstange 1 geführten Teleskopglied 21 nach Art eines Stempels, das einen herausstehenden Kopf aufweist, der sich an einem Anschlag 24 der Stoßstange 1 in seiner eingefahrenen Stellung gemäß Darstellung abstützt. Zwischen diesem Kopf und einem äußeren Abstützring R der Stoßstange 1 ist eine Druckfeder 20 eingespannt, die das Teleskopglied 21 gegen den Kipphebel 2 zu drücken sucht.

Zum Öffnen der Einlaßventile 7 verdreht die über eine Ventilnocken und einen Rollenantrieb betätigte Stoßstange 1 den Kipphebel 2 um eine Drehachse 3 und schiebt die Ventilbetätigungsbrücke 4, geführt durch die Führungsstange 5 der Einrichtung E gegen die Ventilfederkräfte der Ventilfedern 6 und öffnet parallel die beiden Einlaßventile 7. Der obere Teil der Führungsstange 5 weist gegenüber dem unteren Bereich einen größeren Durchmesser mit einem Kolben K auf, wodurch bei der Abwärtsbewegung der Ventilbetätigungsbrücke 4 eine Volumenzunahme in der Ringkammer 8 entsteht und ein ungedrosselter Nachfüllvorgang mit unter Druck stehendem Motorschmieröl über die Anstichbohrung 9 im Zylinderkopf 10 und die Vertikalbohrung 11 sowie die Querbohrung 12 in der Führungsstange 5 möglich ist, weil das Rückschlagventil. 23 in Nachströmungsrichtung geöffnet ist. Die Ventilfederkräfte der Ventilfedern 6 halten eine kraftschlüssige Verbindung der Komponenten Ventile 7, Ventilbetätigungsbrücke 4, Kipphebel 2, Stoßstange 1, Rollenantrieb und Nocken. Der Schließvorgang der Einlaßventile 7 wird eingeleitet, wenn sich der nicht näher dargestellte Rollenantrieb und die Stoßstange 1 entsprechend der nicht gezeigten Nockenkontur abwärts bewegt. Die Ventilbetätigungsbrücke 4 wird durch Federkräfte der Ventilfedern 6 aufwärts geschoben, wobei sich das Volumen in der Ringkammer 8 zwangsweise verringert und das in dieser Kammer befindliche Motorschmieröl über die Querbohrung 12 und über die axiale Bohrung 11 der Führungsstange 5 sowie die Anstichbohrung 9 im Zylinderkopf 10 ungedrosselt über das geöffnete Absperrventil 13 der Ventileinheit V zum Schmierölanschluß 14 entweichen kann.

Wenn dagegen das Absperrventil 13 der Ventileinheit V geschlossen ist, erfolgt während des Schließvorgangs der Einlaßventile 7 der Schmierölablauf aus der Ringkammer 8 nicht mehr ungedrosselt über dieses Absperrventil 13 sondern über die Drossel 15 in der Ventileinheit V1 im Drosselrückschlagventil 16, das einerseits über die T -Verbindung 17 an den Schmierölanschluß 14 und andererseits über die T-Verbindung 18 an die Verbindungsleitung 19 und die Anstichbohrung 9 angeschlossen ist. Die durch Federkräfte der Ventilfedern 6 bewegte Ventilbetätigungsbrücke 4 preßt während des Aufwärtshubes Schmieröl aus der Ringkammer 8 über die Querbohrung 12 und die Vertikalbohrung 11 in der Führungsstange 5 und über die Anstichbohrung 9 im Zylinderkopf 10 und wird dabei zwangsweise durch die Drossel 15 im Drosselrückschlagventil 16 der Ventileinheit V1 behindert, wobei der Aufwärtshub der Ventilbetätigungsbrücke 4 und damit ebenfalls der Schließvorgang der Einlaßventile 7 entsprechend des Drosselquerschnitts der Drossel 15 verzögert wird.

Da jetzt keine kraftschlüssige Verbindung zu der durch die Nockenkurve abwärts gehende Stoßstange 1 besteht, ist das in die Stoßstange 1 integrierte mit einer Feder 20 belastete Teleskopglied 21 vorgesehen. Die gegenüber den Ventilfedern 6 deutlich schwächere Feder 20 gleicht während der verzögerten Einlaßventilschließphase das Spiel zwischen Kipphebel 2 und Stoßstange 1 aus, wobei sich das Teleskopglied 21 axial in der Stoßstangenführung 22 verschieben kann.

Während der Nockenschließphase gelangt zeitlich gestreckt über die Drossel 15 der Ventileinheit V1 Motorschmieröl in die Ringkammer 8, so daß die Federkräfte der Ventilfedern 6 den eindeutigen Schließzustand der Einlaßventile 7 herstellen können und dabei das Teleskopglied 21 den Anschlag 24 der Stoßstangenführung 22 erreicht, bevor der nachfolgende Öffnungsvorgang der Ventile 7 eingeleitet wird. Bei dem Öffnungsvorgang der Einlaßventile 7 ist die Drossel 15 unwirksam, da sich das Schmieröl ungedrosselt über das in Strömungsrichtung öffnende Rückschlagventil 23 über die Anstichbohrung 9 sowie über die axiale Bohrung 11 und die Querbohrung 12 der Führungsstange 5 in die Ringkammer 8 begeben kann und damit der Ventilöffnungsvorgang der Hubkurve des Ventilnockens folgt. Die über die Führungsstange 5 durch den Hub der Ventilbetätigungsbrücke 4 variable Kammer 25 wird über eine Lüftungsbohrung 26 in der Ventilbetätigungsbrücke 4 be- und entlüftet.

## Patentansprüche

1. Variable Ventilsteuerungseinrichtung zum verzögerten Schließen von Ventilen (7) einer Brennkraftmaschine, insbesondere für Diesel- und Gasmotoren, welche eine über einen Ventilnocken und einen Rollenantrieb betätigte Stoßstange (1) aufweist, die mit einem Kipphebel (2) verbunden und um eine Drehachse (3) verschwenkbar ist sowie mit einem Ende eine Ventilbetätigungsbrücke (4) beaufschlagt, die mit ihren beiden freien Enden jeweils mit einem Ventilschaft eines Ventils (7) verbunden ist und der Kipphebel über die Ventilbetätigungsbrücke (4) mit einer Verzögerungseinrichtung (E) verbunden ist, die eine Buchse (Z) an der Ventilbetätigungsbrücke (4) sowie einen darin verschiebbar gehaltenen Stellkolben (K) an einer ortsfesten Führungsstange (5) umfaßt, **dadurch gekennzeichnet, daß** der Kipphebel (2) mit der Verzögerungseinrichtung (E) und einer spielausgleichenden Teleskopeinrichtung (T) in Wirkverbindung stehen, wobei der Kipphebel (2) mittels eines in der Stoßstange (1) geführten und federbelasteten Teleskopgliedes (21) um die Drehachse (3) in Richtung der Ventilbetätigungsbrücke (4) spielfrei verschwenkbar ist, wobei das Teleskopglied (21) in einem hohlen Zylinderschaft der Stoßstange (1) geführt und zwischen einem herausstehenden Kopf des Teleskopgliedes (T) und einem äußeren Abstützring des Zylinderschaftes eine Druckfeder (20) angeordnet ist und daß die vom Kipphebel (2) betätigbare Verzögerungseinrichtung (E) eine Schmieröl aufnehmende Ringkammer (8) aufweist, die über ölführende Verbindungsleitungen (11, 9, 19, 19a) mit Ventileinheiten (V, V1) beim Öffnungs- und/oder Schließvorgang der Einlaßventile (7) verbunden ist, wobei die Ringkammer (8) zwischen der Führungsstange (5) des Stellkolbens (K) und der Zylinderbuchse (Z) an der Ventilbetätigungsbrücke (4) angeordnet ist, wobei die Ringkammer (8) über eine Querbohrung (12) mit einer axialen Bohrung (11) der Führungsstange (5) verbunden ist, in die endseitig eine Anstichbohrung (9) einmündet, welche über Leitungen (19, 19a) mit den Ventileinheiten (V, V1) verbindbar ist.

2. Einrichtung nach Anspruch 1, **dadurch gekennzeichnet, daß** die Anstichbohrung (9) in Abhängigkeit von der Ventilstellung der Ventile (7) über die Leitung (19) entweder mit der Ventileinheit (V), bestehend aus einem Durchgangs- und Absperrventil (13), oder über die Leitung (19a) mit der weiteren Ventileinheit (V1), bestehend aus einem Rückschlagventil (23) und einer Drossel (15), mit einem Schmierölanschluß (14) verbindbar ist.

3. Einrichtung nach den Ansprüchen 1 oder 2, **dadurch gekennzeichnet, daß** bei einem Schließvorgang der Ventile (7), das in der Ringkammer (8) eingeschlossene Schmieröl über die axiale Bohrung (11) und die Anstichbohrung (9) sowie über die Leitung (19a) bei geschlossenem Ventil (13) in der Ventileinheit (V) der Drossel (15) in der Ventileinheit (VI) zuführbar ist und die Einlaßventile (7) eine Verzögerungsstellung einnehmen.

4. Einrichtung nach einem der Ansprüche 1 bis 3, **dadurch gekennzeichnet, daß** in einer nach der Schließphase der Ventile (7) anschließenden Öffnungsphase der Ventile (7) das Schmieröl über das Rückschlagventil (23) der Ventileinheit (V1), die Leitung (19), die Anstichbohrung (9) und die axiale Bohrung (11) der Ringkammer (8) der Verzögerungseinrichtung (E) zuleitbar ist.

5. Einrichtung nach einem der Ansprüche 1 bis 4, **dadurch gekennzeichnet, daß** in einer Schließphase der Ventile (7) das Absperrventil (13) in der Ventileinheit (V) entweder geschlossen oder geöffnet ist.

## Claims

1. A variable valve control device for the delayed closing of valves (7) of an internal combustion engine, particularly Diesel and gas engines, comprising a push rod (1) actuated by a valve cam and a cam follower or roller drive, said push rod (1) being connected to a rocker arm (2) which is rotatable around an axis of rotation (3) and acts on a valve actuating bridge (4) at one end, free ends of said valve actuating bridge each being connected to a respective valve shaft of a valve (7), and wherein said rocker arm is connected to the valve actuating bridge (4) via a delay device (E), said delay device (E) comprising a bushing (Z) on the valve actuating bridge (4) and a plunger (K) slidably mounted therein on a fixed guiding rod (5), **characterized by**
said rocker arm (2) being operatively connected to said delay device (E) and a lash adjusting telescoping device (T) and being rotatable about said axis of rotation (3) in direction of said valve actuating bridge (4) without lash via a spring loaded telescoping member (21) guided in said push rod (1), wherein said telescoping member (21) is guided in a hollow cylinder stem of said push rod (1) and a compression spring (20) is arranged between a projecting head of said telescoping device (T) and an outer backing ring of the cylinder stem, and said delay device (E), which is operable by the rocker arm (2), comprising a ring chamber (8) containing lubrication oil, said ring chamber (8) being connected to valve units (V, V1) via oil conducting connection lines (11, 9, 19, 19a) during the opening and/or closing operation of said inlet valves (7), wherein said ring chamber (8) is arranged between said guiding rod (5) of said plunger (K) and said cylinder bushing (Z) at the valve actuating bridge (4), and wherein said ring chamber (8) is connected to an axial bore (11) of said guiding rod (5) via a transversal bore (12), said axial bore (11) opening to a branch bore (9) at its end, said branch bore being connectable to said valve units (V, V1) via lines (19, 19a).

2. Device according to claim 1, **characterized in that** said branch bore (9) is connectable to a lubricating oil port (14) depending on the valve position of said valve (7) via said line (19) either via the valve unit (V) consisting of a open-close valve (13), or via said line (19a) having said second valve unit (V1) comprising a check valve (23) and a throttle (15).

3. Device according to claim 1 or 2, **characterized in that**, during closing operation of said valves (7), said lubricating oil captured in the ring chamber (8) is deliverable via said axial bore (11), said branch bore (9) and said line (19a) to said throttle (15) in said valve unit (V1), when said valve (13) of said valve unit (V) is closed, and said inlet valves (7) are located in a delay position.

4. Device according to one of the claims 1 to 3, **characterized in that**, during an opening phase of said valves (7) after a closing phase of said valves (7), the lubricating oil is deliverable to said ring chamber (8) of said delay device (E) via said check valve (23) of said valve unit (V1), said line (19), said branch bore (9) and said axial bore (11)

5. Device according to one of claims 1 to 4, **characterized in that**, said closing valve (13) in said valve unit (V) is either closed or open during a closing phase of said valves (7).

## Revendications

1. Dispositif de commande de soupapes pour la fermeture retardée de soupapes (7) d'un moteur à combustion, en particulier pour moteurs à essence et moteurs diesel qui présentent une tige de culbuteur (1), actionnée par l'intermédiaire d'une came de soupape et d'un entraînement à rouleaux, qui actionne un culbuteur (2) qui peut pivoter autour d'un axe de rotation (3) et qui actionne par une extrémité un pont d'actionnement de soupapes (4) qui est en prise par chacune de ses deux extrémités libres avec une tige de soupape d'une soupape respective (7) et le culbuteur est relié par l'intermédiaire du pont d'actionnement de soupapes (4) à un moyen de retard (E) qui comprend une douille (Z) du pont d'actionnement de soupapes (4) ainsi qu'un piston de réglage (K) maintenu coulissant dans la douille sur une tige de guidage fixe (5), **caractérisé en ce que** le culbuteur (2) est en liaison fonctionnelle avec le moyen de retard (E) et avec un dispositif télescopique (T) de compensation de jeu, dont le culbuteur (2) peut pivoter sans jeu autour de l'axe de rotation (3) dans la direction du pont d'actionnement de soupapes (4) au moyen d'un élément télescopique (21) guidé dans la tige de culbuteur (1) et poussé élastiquement, dont l'élément télescopique (21) est guidé dans une tige cylindrique creuse de la tige de culbuteur (1) et un ressort de pression (20) est disposé entre une tête en surplomb de l'élément télescopique (T) et une bague d'appui extérieure de la tige cylindrique, et **en ce que** le moyen de retard (E) pouvant être actionné par le culbuteur (2) présente une chambre annulaire (8) recevant une huile de lubrification, qui est reliée à des modules de soupape (V, VI) par l'intermédiaire de conduits de raccordement (11, 9, 19, 19a) lors du processus d'ouverture et/ou de fermeture des soupapes d'admission (7) la chambre annulaire (8) étant disposée entre la tige de guidage (5) du piston de réglage (K) et la douille cylindrique (Z) sur le pont d'actionnement de soupapes (4) dont la chambre annulaire (8) est relié par l'intermédiaire d'un alésage transversal (12) à un alésage axial (11) de la tige de guidage (5) dans lequel débouche un alésage de passage (9) qui peut être raccordé par l'intermédiaire de conduits (19, 19a) aux modules de soupape (V, VI).

2. Dispositif selon la revendication 1, **caractérisé en ce que** l'alésage de passage (9) peut être raccordé en fonction de la position des soupapes (7) par l'intermédiaire du conduit (19) soit au module de soupape (V) se composant d'une vanne d'arrêt et de passage (13), soit par l'intermédiaire du conduit (19a) à l'autre module de soupape (VI) se composant d'un clapet anti-retour (23) et d'une commande par étranglement (15) à un branchement d'huile de lubrification (14).

3. Dispositif selon la revendication 1 ou 2, **caractérisé en ce que** lors d'un processus de fermeture des soupapes (7), l'huile de lubrification enfermée dans la chambre annulaire (8) peut être amenée dans le module de soupape (VI) par l'alésage axial (11) et l'alésage de passage (9) ainsi que par le conduit (19a) lorsque la soupape (13) est fermée dans l'unité de vanne (V) de la commande par étranglement (15) et **en ce que** les soupapes d'admission (7) prennent une position de retard.

4. Dispositif selon l'une quelconque des revendications 1 à 3, **caractérisé en ce que** dans une phase d'ouverture des soupapes (7) succédant à une phase de fermeture des soupapes (7) l'huile de lubrification peut être amenée à au moyen de retard (E) par l'intermédiaire du clapet anti-retour (23), du module de soupape (VI) du conduit (19), de l'alésage de passage (9) et de l'alésage axial (11) de la chambre annulaire (8).

5. Dispositif selon l'une quelconque des revendications 1 à 4, **caractérisé en ce que** dans une phase de fermeture des soupapes (7) la vanne d'arrêt (13) dans le module de soupape (V) est soit fermée, soit ouverte.
